# EUROPÄISCHE PATENTSCHRIFT

(11) **EP 3 149 354 B1**
(45) Veröffentlichungstag und Bekanntmachung des Hinweises auf die Patenterteilung: **24.04.2019**
(21) Anmeldenummer: 15729111.3
(22) Anmeldetag: 02.06.2015
(51) Int. Cl.: F16M 11/28, F16F 15/067, F16F 1/04, F16L 3/205, F16F 1/12

(54) **TELESKOPIERBARE FEDERSTÜTZE**
TELESCOPIC SPRING SUPPORT
SUPPORT DE RESSORT TELESCOPIQUE

(30) Priorität: 02.06.2014 DE 102014107701
(43) Veröffentlichungstag der Anmeldung: 05.04.2017
(73) Patentinhaber: Lisega SE, 27404 Zeven (DE)
(72) Erfinder: BERNERT, Jörg, 27404 Zeven (DE); HEINRICHS, Ekkehard, 27404 Zeven (DE); RADTKE, Arnold, 27404 Zeven (DE)
(74) Vertreter: Lippert Stachow Patentanwälte Rechtsanwälte
(86) Internationale Anmeldenummer: PCT/EP2015/062298
(87) Internationale Veröffentlichungsnummer: WO 2015/185574

(56) Entgegenhaltungen:
- EP-A2- 2 664 816
- US-A- 3 000 600
- US-A- 4 457 196

## Beschreibung

Die Erfindung betrifft eine teleskopierbare Federstütze gemäß dem Oberbegriff von Anspruch 1.

Herkömmliche Federstützen werden im Anlagenbau oder im Rohrleitungsbau zum in einer Lastrichtung federnden Unterstützen von Bauelementen eingesetzt. Der Einsatz von solchen Federstützen ist gerade in solchen Anwendungsfällen erforderlich, in denen die Lastkraft, die ein Bauelement auf die unterstützende Federstütze ausübt, situationsbedingt variiert und der Lastkraft federnd nachgegeben werden soll. Dies ist beispielsweise bei Dehnungsverschiebungen von Bauelementen in der Lastrichtung der Fall, die beispielsweise wärmebedingt auftreten können. Solche Anforderungen bestehen insbesondere im Rohrleitungsbau, wenn sich ein jeweils unterschiedliches Dehnungsverhalten der Rohrleitungen bei unterschiedlichen Temperaturen ergibt und somit eine Dehnungsverschiebung der Rohrleitungen in der Lastrichtung auftritt.

Herkömmliche Federstützen werden so eingesetzt, dass Bauelemente auf die Federstützen aufgelegt werden, so dass die Federstützen die Last der Bauelemente tragen. Ein Bauelement übt dabei über seine Schwerkraft eine Lastkraft entlang der Lastrichtung auf die das Bauelement unterstützende Federstütze aus. Damit die Federstütze ein federndes Unterstützen des Bauelements gewährleisten kann, weist die Federstütze herkömmlicherweise ein Gehäuse auf, in dem eine Druckfeder vorgespannt ist, wobei die Last des Bauelements auf die vorgespannte Druckfeder abgelegt wird. In Abhängigkeit von der Federkennlinie der Druckfeder ermöglicht die Druckfeder einen bestimmten Verschiebeweg des unterstützten Bauelements in der Lastrichtung, wenn die Lastkraft, die das Bauelement auf die Federstütze ausübt, um einen bestimmten Betrag variiert. Somit sind herkömmliche

Federstützen dazu geeignet, Bauelemente zu tragen und dem Dehnungsverhalten der Bauelemente gerecht zu werden, wodurch unzulässig hohe Spannungen und Zerstörungen in einem System mit entsprechenden Bauelementen wirksam vermieden werden können. Dabei sind gattungsgemäße Federstützen üblicherweise so ausgebildet, dass sie im Anwendungsfall einen Verschiebeweg von bis zu 10 mm, teilweise bis zum 20 mm, teilweise gar bis zu 30 mm erlauben. Beispielsweise ergibt sich im Rohrleitungsbau der Verschiebeweg aus der Federkennlinie und der im Rohrleitungsbau typischen Anforderung, dass die Lastkraft, die eine Rohrleitung auf eine Federstütze ausübt, in sämtlichen Situationen des Rohrleitungssystems um nicht mehr als 25 % variieren darf. Dabei werden gattungsgemäße Federstützen üblicherweise zum Unterstützen von Bauelementen eingesetzt, die eine erhebliche Lastkraft auf die Federstützen ausüben. Typischerweise werden gattungsgemäße Federstützen in einem Lastkraftbereich von ca. 0,2 bis 400 kN, insbesondere 0,5 bis 100 kN eingesetzt.

Herkömmliche Federstützen sind so ausgebildet, dass sie ein Gehäuse, einen Druckteller, ein Lastrohr und eine Druckfeder umfassen. Das Gehäuse weist eine Standseite und eine Oberseite auf. In der Oberseite ist eine Öffnung vorgesehen. Der Druckteller ist in dem Gehäuse angeordnet und innerhalb des Gehäuses in der Lastrichtung verschiebbar, wobei die Druckfeder zwischen dem Druckteller und der Standseite angeordnet ist und den Druckteller mit einer Federkraft beaufschlagt. Dabei ist die Druckfeder in jeder Position des Drucktellers innerhalb des Gehäuses in der Lastrichtung vorgespannt, so dass sie den Druckteller immer in der Lastrichtung zur Oberseite hin an das Gehäuse presst. Das Lastrohr ist mit dem Druckteller verbunden und so angeordnet, dass es sich in jeder Position des Drucktellers von dem Inneren des Gehäuses durch die Öffnung nach außen erstreckt. Wird ein Bauelement auf das Lastrohr aufgelegt, ist es somit federnd unterstützt, da die Druckfeder auf den Druckteller die Federkraft ausübt und das Lastrohr mit dem Druckteller verbunden ist.

Für den Einsatz zum Unterstützen eines bestimmten Bauelements, das eine bestimmte Lastkraft ausübt, wird eine herkömmliche Federstütze folgendermaßen vorbereitet: Zunächst wird das Lastrohr mit der bestimmten, erwarteten Lastkraft des Bauelements in Lastrichtung beaufschlagt, wodurch der mit dem Lastrohr verbundene Druckteller in dem Gehäuse eine bestimmte Position entlang der Lastrichtung zur Standseite hin einnimmt. Sodann wird die Position des Drucktellers in dem Gehäuse über eine Blockiervorrichtung fixiert. Auf die solchermaßen vorbereitete Federstütze kann dann das Bauelement aufgelegt werden, wobei nach dem Auflegen des Bauelements mit der bestimmten Lastkraft die Blockiervorrichtung entfernt werden kann, ohne dass der Druckteller und somit auch das Lastrohr die jeweilige Position zum Gehäuse der Federstütze wesentlich verändert.

Die Höhe der Federstütze in Lastrichtung ist somit durch die Lastkraft, die auf die Federstütze in Lastrichtung wirkt oder für die die Federstütze eingestellt ist, vorgegeben. Bei einigen bekannten Federstützen ist unabhängig von der entsprechenden Lastkraft eine geringfügige Variation der Höhe der Federstütze in der Lastrichtung möglich, indem die relative Position des Lastrohrs zum Druckteller in einem bestimmten Streckenbereich in Lastrichtung variiert werden kann, üblicherweise in einem Bereich von 10 bis 30 mm. Dadurch ist eine geringfügige Anpassung der Höhe der Federstütze auf die gewünschte Einbauumgebung möglich.

Herkömmlicherweise sind Federstützen so ausgebildet, dass sie für einen großen Lastenbereich eingesetzt werden können. Meist beträgt die minimale Lastkraft, zu deren federnder Unterstützung eine Federstütze geeignet ist, weniger als die Hälfte der maximalen Lastkraft, zu deren federnder Unterstützung die Federstütze gleichermaßen geeignet ist. Dieser weite Einsatzbereich ist bei herkömmlichen Federstützen dadurch realisiert, dass in Lastrichtung lange Spiralfedern als Druckfedern verwendet werden, deren Vorspannung durch Verschieben des Drucktellers in dem Gehäuse auf die gewünschte Lastkraft eingestellt werden kann. Dadurch ergibt sich eine entsprechende Gehäusehöhe in der Lastrichtung, die durch die Länge der Druckfeder in der Lastrichtung bei geringstmöglicher Vorspannung der Druckfeder bestimmt ist.

Diese Gestaltung herkömmlicher Federstützen hat sich jedoch für manche Anwendungsgebiete als unzweckmäßig erwiesen. Beispielsweise ist im Rohrleitungsbau häufig nur wenig Platz für die Unterbringung der Federstützen unter den Rohrleitungen vorhanden, so dass die erhebliche Erstreckung des Federstützengehäuses in der Lastrichtung häufig problematisch ist. Dem wird herkömmlicherweise dadurch begegnet, dass Federstützen mit extrem großen Federsteifigkeiten eingesetzt werden, wodurch dann zwar eine geringe Gehäusehöhe in der Lastrichtung gewährleistet sein kann, andererseits jedoch wegen der hohen Federhärte Federsteifigkeit nur ein sehr geringer Verschiebeweg in der Lastrichtung bei einer Variation der Lastkraft zur Verfügung steht. Dies kann ungewünschte Spannungen in den unterstützten Bauelementen, und damit beispielsweise in einem Rohrleitungssystem, mit sich bringen. Eine gattungsgemäße Federstütze ist beispielsweise in dem Dokument US 3,000,600 A offenbart. Bei dieser Federstütze sind ein Druckteller und eine Feder in dem Gehäuse der Federstütze angeordnet, wobei der Druckteller mit einem Lastrohr verbunden ist und die Feder den Druckteller mit einer Federkraft beaufschlagt. Ein Distanzelement, das zwischen der Oberseite des Gehäuses und dem Druckteller in dem Gehäuse vorgesehen ist, regelt die Vorspannung der Feder. Weiterhin sind im Stand der Technik Federeinrichtungen mit teleskopierbaren Gehäusen bekannt. So offenbart das Dokument US 4,457,196 A eine in einem zweiteiligen Gehäuse gekapselte Federeinrichtung, die für den Einsatz in Stanzmaschinen geeignet ist. Dokument EP 2 664 816 A2 offenbart eine Feder zum federelastischen Verbinden von zwei Bauteilen, wobei die Feder aus einem zweiteiligen Gehäuse aufgebaut ist, dessen beide Teile zueinander verschiebbar sind.

Der Erfindung liegt die Aufgabe zugrunde, eine teleskopierbare Federstütze bereitzustellen, die die Nachteile herkömmlicher Federstützen zumindest teilweise behebt.

Als eine Lösung dieser technischen Aufgabe schlägt die Erfindung eine teleskopierbare Federstütze mit den Merkmalen gemäß Anspruch 1 vor. Die erfindungsgemäße Federstütze ist teleskopierbar und weist ein Gehäuse, einen Druckteller, ein Lastrohr sowie eine Druckfeder auf. Das Gehäuse weist eine Standseite und eine Oberseite auf. Dabei ist die Oberseite zur Standseite in der Lastrichtung versetzt, insbesondere ist die Oberseite die der Standseite gegenüberliegende Seite des Gehäuses. Das Gehäuse ist im Inneren insbesondere im Wesentlichen hohl, so dass in dem Gehäuse ein ausreichender Freiraum für den Druckteller, die Druckfeder und zumindest einen Abschnitt des Lastrohrs vorgesehen ist. Das Gehäuse kann insbesondere hohlzylinderartig ausgestaltet sein, wobei die Standseite eine erste Grundfläche und die Oberseite eine zweite Grundfläche der zylinderartigen Form darstellt. Der Druckteller ist in dem Gehäuse angeordnet und innerhalb des Gehäuses in der Lastrichtung verschiebbar. Dabei kann der Druckteller beispielsweise bei einer Verschiebung in Lastrichtung von den zwischen der Oberseite und der Standseite des Gehäuses verlaufenden Seitenwänden des Gehäuses geführt sein. Insbesondere kann der Druckteller an diesen Seitenwänden des Gehäuses während seines gesamten möglichen Verschiebewegs innerhalb des Gehäuses in Lastrichtung anliegen oder nur geringfügig von ihnen beabstandet sein, damit eine Führung des Drucktellers über seinen möglichen Verschiebeweg in Lastrichtung hinweg gewährleistet ist. Die Seitenwände können beispielsweise zumindest abschnittsweise in Lastrichtung verlaufen.

Die Druckfeder ist zwischen dem Druckteller und der Standseite angeordnet und beaufschlagt den Druckteller mit einer Federkraft, die in der Lastrichtung zur Oberseite hin gerichtet ist. Die Druckfeder steht somit in jeder möglichen Position des Drucktellers in Lastrichtung unter einer Vorspannung und übt daher in jeder dieser Positionen eine Federkraft auf den Druckteller aus. Die Größe der von der Druckfeder auf den Druckteller ausgeübten Federkraft ist selbstverständlich von der Position des Drucktellers in der Lastrichtung und damit von der Vorspannung, unter der die Druckfeder steht, abhängig. Insbesondere kann die Druckfeder als Spiralfeder ausgebildet sein, deren Federrichtung in Lastrichtung verläuft.

Das Lastrohr ist mit dem Druckteller verbunden und erstreckt sich in jeder möglichen Position des Drucktellers entlang seines Verschiebewegs in dem Gehäuse von dem Inneren des Gehäuses durch eine Öffnung, die an der Oberseite des Gehäuses angeordnet ist, nach außen. Dabei wird insbesondere auf die Position des Drucktellers im betriebsbereiten Zustand der Federstütze abgestellt. Die an der Oberseite des Gehäuses vorgesehen Öffnung ist dabei so auf die Abmessungen des Drucktellers abgestimmt, dass der Druckteller nicht, insbesondere nicht aufgrund der Federkraft der Druckfeder, durch die Öffnung nach außen gelangen kann. Somit beschränkt die Oberseite den maximalen Abstand, den der Druckteller von der Standseite in der Lastrichtung haben kann. Dadurch, dass sich das Lastrohr in jeder Position des Drucktellers durch die Öffnung nach außen erstreckt, kann stets eine Last auf das Lastrohr von der Oberseite aus auf die Federstütze aufgelegt werden, die dann über die Druckfeder federnd unterstützt ist. Das Lastrohr kann beispielsweise mit dem Druckteller dauerhaft positionsfest verbunden sein. Beispielsweise kann das Lastrohr auch mit dem Druckteller verschraubt sein. Insbesondere ist eine solche Verbindung zwischen Druckteller und Lastrohr möglich, dass verschiedene positionsfeste Positionen von Druckteller und Lastrohr zueinander einstellbar sind, wobei insbesondere sich die Lage von Druckteller und Lastrohr zueinander in den verschiedenen Positionen in der Lastrichtung unterscheiden kann.

Die erfindungsgemäße teleskopierbare Federstütze zeichnet sich dadurch aus, dass das Gehäuse ein Standgehäuse und ein Verschiebegehäuse umfasst, wobei das Verschiebegehäuse in der Lastrichtung zum Standgehäuse verschiebbar ist zum Verändern der Gehäusehöhe in Lastrichtung, wobei das Standgehäuse die Standseite aufweist und das Verschiebegehäuse die Öffnung aufweist. Das Standgehäuse und das Verschiebegehäuse sind somit Gehäuseelemente des Gehäuses der erfindungsgemäßen Federstütze. Über die Verschiebbarkeit von Verschiebegehäuse und Standgehäuse zueinander ist die Federstütze auf erfindungsgemäße Art und Weise in Lastrichtung teleskopierbar. Dabei ist die Erstreckung des Gehäuses in der Lastrichtung, und damit die Gehäusehöhe in der Lastrichtung, über die Verschiebbarkeit der beiden Gehäuseelemente veränderbar. Somit ist das Gehäuse der Federstütze teleskopierbar. Dies ergibt sich insbesondere daraus, dass das Standgehäuse die Standseite aufweist und das Verschiebegehäuse die Öffnung und somit zumindest einen Abschnitt der Oberseite. Beispielsweise kann das Standgehäuse in einer Richtung senkrecht zur Lastrichtung innerhalb des Verschiebegehäuses angeordnet sein, beispielsweise kann das Verschiebegehäuse innerhalb einer Richtung senkrecht zur Lastrichtung innerhalb des Standgehäuses angeordnet sein. Das Standgehäuse kann an seinem der Standseite gegenüberliegenden Ende in Lastrichtung offen sein, so dass sich die Druckfeder von der Standseite in Lastrichtung über das Standgehäuse hinaus in das Verschiebegehäuse erstrecken kann. Insbesondere kann die der Standseite gegenüberliegende Seite in Lastrichtung des Standgehäuses offen sein, indem sie einen Durchgang mit solchen Abmessungen aufweist, dass der Druckteller in dem Gehäuse in Lastrichtung so verschiebbar ist, dass er sowohl in dem Standgehäuse als auch in dem Verschiebegehäuse anordenbar ist, wobei mit einer entsprechenden Position des Drucktellers selbstverständlich eine entsprechende Vorspannung bzw. Belastung der Druckfeder einhergeht. In einer Ausführungsform kann die relative Position von Standgehäuse zu Verschiebegehäuse durch eine Blockiervorrichtung fixierbar sein. In einer Ausführungsform sind das Standgehäuse und das Verschiebegehäuse so zueinander geführt, dass die Position des Drucktellers in der Lastrichtung die relative Position von Standgehäuse und 10 Verschiebegehäuse in Lastrichtung zueinander festlegt. Beispielsweise können Standgehäuse und Verschiebegehäuse bei der Anordnung des Drucktellers innerhalb des Standgehäuses in einer ersten relativen Position zueinander angeordnet sein, in der die Öffnung von der Standseite in der Lastrichtung den geringstmöglichen Abstand aufweist, wobei sich bei einer Anordnung des Drucktellers in Lastrichtung außerhalb des Standgehäuses der Abstand der Öffnung von der Standseite mit zunehmendem Abstand des Drucktellers von der Standseite vergrößern kann. Insbesondere können Standgehäuse und Verschiebegehäuse so zueinander ausgebildet sein, dass sie in Lastrichtung kontinuierlich und frei zueinander verschiebbar sind. Das Standgehäuse weist eine zylindrische Führung auf, die an der zum Innenraum weisenden Seite der Standfläche angeordnet ist und sich mit ihrer Zylinderachse in Lastrichtung erstreckt, wobei die zylindrische Führung innerhalb des Lastrohrs verläuft und zum Führen des Lastrohres ausgebildet ist.

In einer Ausführungsform ist die zylindrische Führung so ausgebildet, dass das Lastrohr in der Richtung ihrer Zylinderachse an der Führung entlanggleitet. Über die Führung ist das Lastrohr in jeder seiner möglichen Positionen sicher gehalten und geführt. Über die Führung wird ein Verkippen des Lastrohres bei einer schrägen Belastung des Lastrohres durch ein Bauelement wirksam verhindert. In einer weiteren Ausführungsform ist die zylindrische Führung an die Standseite angeschweißt. Die zylindrische Führung ist positionsfest mit der Standseite des Standgehäuses verbunden. Über die zylindrische Führung ist neben der Führung des Lastrohres auch eine Führung des Drucktellers gewährleistet, oder besonders unterstützt da der Druckteller erfindungsgemäß in der einsatzbereiten Federstütze stets mit dem Lastrohr verbunden ist.

Die erfindungsgemäße teleskopierbare Federstütze weist den Vorteil auf, dass ihre Gehäusehöhe in der Lastrichtung veränderbar ist. Somit ist die erfindungsgemäße teleskopierbare Federstütze gerade für solche Anwendungsgebiete besonders vorteilhaft und herkömmlichen Federstützen überlegen, in denen nur wenig Platz unter Bauelementen zum Unterstützen der Bauelemente gegeben ist. Die erfindungsgemäße Federstütze weist ferner den Vorteil auf, dass in ihr Druckfedern mit einer geringen Federkonstanten auch zum federnden Unterstützen von Bauelementen, die eine große Lastkraft in Lastrichtung auf die Federstütze ausüben, verwendet werden können, ohne dass damit eine übergroße Gehäusehöhe in Lastrichtung einhergeht.

Denn die erfindungsgemäße Federstütze kann gerade so ausgelegt sein, dass ihre Gehäusehöhe mit zunehmender Belastung bzw. Vorspannung der Druckfeder abnimmt, indem dann die Länge der Druckfeder in Lastrichtung verringert wird, was mit einer entsprechenden Position des Drucktellers in dem Gehäuse einhergeht und damit mit einer entsprechenden Verschiebung des Verschiebegehäuses zum Standgehäuse dergestalt, dass die Öffnung nur einen geringen Abstand in Lastrichtung von der Standseite aufweist und damit die Gehäusehöhe gering ist. Damit gewährleistet die erfindungsgemäße Federstütze die Bereitstellung einer Federstütze mit einer geringen Gehäusehöhe in Lastrichtung, die schwere Bauelemente federnd unterstützen kann und dabei einen ausreichenden Verschiebeweg wegen der geringen Federkonstanten gewährleisten kann. Darüber hinaus ermöglicht die erfindungsgemäße Federstütze das Einsetzen von Druckfedern mit einer bestimmten Federkonstanten in einem weiten Lastkraftbereich, was die Herstellung der Federstütze wegen der häufigen Verwendbarkeit ein und desselben Druckfedertyps vergünstigt. Beispielsweise kann eine erfindungsgemäße Federstütze so ausgebildet sein, dass sie zum federnden Unterstützen von Lastkraften geeignet ist, die zwischen 30 % und 100 % der maximalen Lastkraft bzw. der maximalen Federkraft liegen.

In einer Ausführungsform umfassen das Standgehäuse und das Verschiebegehäuse jeweils einen Hohlzylinderabschnitt, wobei insbesondere die beiden Hohlzylinderabschnitte so angeordnet sind, dass ihre Zylinderachsen zusammenfallen und in der Lastrichtung verlaufen. Beispielsweise können die Hohlzylinderabschnitte der beiden Gehäuseelemente durch einen Rohrabschnitt gebildet sein. Beispielsweise können die Hohlzylinderabschnitte der beiden Gehäuseelemente so zueinander angeordnet sein, dass der eine Hohlzylinderabschnitt in einer Richtung senkrecht zur Lastrichtung in dem anderen Hohlzylinderabschnitt angeordnet ist, so dass über die Hohlzylinderabschnitte eine Führung der beiden Gehäuseelemente bei einer Verschiebung des Verschiebegehäuses zum Standgehäuse gewährleistet ist. Das Vorsehen der Hohlzylinderabschnitte bei den beiden Gehäuseelementen kann somit zum Gewährleisten der Führung zwischen den Gehäuseelementen vorteilhaft sein, insbesondere kann eine gleichmäßig gute Führung der beiden Gehäuseelemente zueinander über den gesamten möglichen Verschiebeweg des Verschiebegehäuses zum Standgehäuse gewährleistet sein. Darüber hinaus kann die Herstellung der beiden Gehäuseelemente mit Hohlzylinderabschnitten besonders vereinfacht sein, insbesondere bei der Realisierung der Hohlzylinderabschnitte über einen Rohrabschnitt.

Vorzugsweise weist das Standgehäuse einen ersten Arretiervorsprung auf und das Verschiebegehäuse einen zweiten Arretiervorsprung, wobei die beiden Arretiervorsprünge zum Begrenzen der Verschiebbarkeit des Verschiebegehäuses zum Standgehäuse in der Lastrichtung ausgebildet sind, wobei die beiden Arretiervorsprünge so in dem Gehäuse angeordnet sind, dass sie bei einer in Lastrichtung maximalen Entfernung des Verschiebegehäuses von der Standseite aneinander anliegen. Beispielsweise kann der erste Arretiervorsprung an einem zur Oberseite gewandten Ende des Standgehäuses angeordnet sein. Beispielsweise kann der erste Arretiervorsprung einen Durchgang an dem in Lastrichtung der Standseite gegenüberliegenden Ende des Standgehäuses begrenzen. Beispielsweise kann der zweite Arretiervorsprung an einem zur Standseite gewandten Ende des Verschiebegehäuses angeordnet sein. Zumindest einer der beiden Arretiervorsprünge kann an einer in der Lastrichtung verlaufenden Seitenwand des entsprechenden Gehäuseelements angeordnet sein und von dieser Seitenwand aus in einer Richtung senkrecht zur Lastrichtung verlaufen. Über die beiden Arretiervorsprünge kann die Verschiebbarkeit des Verschiebegehäuses zum Standgehäuse effektiv begrenzt sein, indem eine maximale Entfernung des Verschiebegehäuses von der Standseite in der Lastrichtung vorgegeben ist. Dadurch kann zum Beispiel Instabilitäten der Federstütze bei einer zu großen Erstreckung der Federstütze in der Lastrichtung vorgebeugt werden. Insbesondere können die beiden Arretiervorsprünge Sicherheit geben, dass das Verschiebegehäuse zum Standgehäuse fest gehalten ist, und dies auch dann, wenn beispielsweise eine Belastung des Lastrohrs ruckartig nachlässt, beispielsweise indem ein Bauelement ruckartig von der Federstütze abgleitet. In diesem Fall schnellt der Druckteller von der Druckfeder getrieben von der Standseite in Lastrichtung weg. Durch die Arretiervorsprünge kann wirksam verhindert werden, dass in einem solchen Fall die beiden Gehäuseelemente auseinandergerissen werden können und, beispielsweise zusammen mit Druckteller und Druckfeder, in die Umgebung schnellen können. Dies ist wegen der hohen Federkräfte der Druckfeder, die anwendungsgemäß wegen der hohen zu unterstützenden Lastkraft erforderlich ist, besonders relevant und vorteilhaft.

In einer Ausführungsform weist das Verschiebegehäuse an seinem zur Oberseite gewandten Ende einen senkrecht zur Lastrichtung verlaufenden Haltevorsprung auf, der die Öffnung gegrenzt. Bei einer Ausbildung des Verschiebegehäuses nach Art eines Hohlzylinders handelt es sich dabei um das axiale Ende des Verschiebegehäuses, und der Haltevorsprung verläuft in radialer Richtung. Durch die Begrenzung der Öffnung durch einen entsprechenden Haltevorsprung kann die Öffnung auf solche Abmessungen begrenzt sein, dass der Druckteller zuverlässig nicht durch die Öffnung nach außen gelangen kann, auch dann nicht, wenn er mit einer hohen Federkraft der Druckfeder in Lastrichtung zur Oberseite hin und damit gegen den Rand der Öffnung, und damit gegen den Haltevorsprung gepresst ist.

Vorzugsweist weist das Standgehäuse und/oder das Verschiebegehäuse einen Hohlzylinderabschnitt auf, der aus einem Rohr geformt ist, wobei zumindest einer der Arretiervorsprünge oder der Haltevorsprung durch eine Umformung des Rohres gebildet ist. Durch die Umformung des Rohres kann ein entsprechender Vorsprung besonders einfach und stabil ausgebildet sein. Die Umformung kann beispielsweise als Einformung oder als Aushalsung ausgebildet sein. Zumindest einer der Vorsprünge kann beispielsweise auch dadurch realisiert sein, dass er an einen entsprechenden Hohlzylinderabschnitt angeschweißt ist. Hierdurch kann beispielsweise die Form des Vorsprungs besonders einfach angepasst sein und die Herstellung des Vorsprungs unter Gewährleistung einer hohen Stabilität ebenfalls einfach ermöglicht sein.

Vorzugsweise ist das Verschiebegehäuse in einer Richtung senkrecht zur Lastrichtung innerhalb des Standgehäuses angeordnet. Dadurch kann eine relativ große Erstreckung des Standgehäuses senkrecht zur Lastrichtung und damit ein stabiler Stand der Federstütze an der Standseite gewährleistet sein. Darüber hinaus kann dadurch die Verschiebbarkeit der beiden Gehäuseelemente besonders einfach realisiert sein und eine Führung der Druckfeder und des Drucktellers innerhalb des Verschiebegehäuses besonders günstig vorgesehen sein. Vorzugsweise ist die Druckfeder in einer Richtung senkrecht zur Lastrichtung innerhalb des Verschiebegehäuses und innerhalb des Standgehäuses angeordnet. Dadurch kann zum einen die Druckfeder besonders sicher in dem Gehäuse gehalten sein, zum anderen eine besonders gute Führung des Drucktellers und/oder der Druckfeder zum Gewährleisten einer geführten Verschiebbarkeit des Drucktellers innerhalb des Gehäuses gewährleistet sein.

In einer Ausführungsform weist die Standseite des Standgehäuses an ihrer zum Innenraum des Gehäuses weisenden Seite und/oder der Druckteller an seiner zur Standseite weisenden Seite einen Fixiervorsprung auf, der in einer Richtung senkrecht zur Lastrichtung innerhalb oder außerhalb der Druckfeder angeordnet ist zum Verhindern einer Verschiebung der Druckfeder, insbesondere senkrecht zur Lastrichtung, in dem Gehäuse. Der Fixiervorsprung ist vorzugsweise positionsfest an der Standseite bzw. dem Druckteller angeordnet. Beispielsweise kann der Fixiervorsprung integral in einem einstückigen Druckteller vorgesehen sein. Beispielsweise kann der Fixiervorsprung an die Standseite aufgeschweißt sein. Beispielsweise kann der Fixiervorsprung ringförmig ausgebildet sein. Beispielsweise kann die Druckfeder an dem Fixiervorsprung anliegen, insbesondere umfänglich anliegen. Über einen entsprechenden Fixiervorsprung kann die Stabilität der Federstütze besonders vorteilhaft erhöht sein, indem die Druckfeder in dem Gehäuse sicher geführt sein kann. Insbesondere kann über den Fixiervorsprung an dem Druckteller auch eine besonders gute Führung zwischen Druckteller und Druckfeder gewährleistet sein. Dadurch kann beispielsweise eine Führung des Drucktellers, beispielsweise über in Lastrichtung verlaufende Seitenwände des Gehäuses, eine Führung der Druckfeder mit sich bringen und umgekehrt eine Führung der Druckfeder eine Führung des Drucktellers bewirken.

In einer Ausführungsform weist der Druckteller eine Aussparung auf, durch die das Lastrohr verläuft. Entsprechend erstreckt sich das Lastrohr in Lastrichtung zu beiden Seiten des Drucktellers, wodurch eine besonders gute Führung des Lastrohres und des Drucktellers gewährleistet sein kann. Vorzugsweise weist die Aussparung ein Innengewinde auf, das mit einem an der Außenseite des Lastrohres angeordneten Außengewinde korrespondiert, wobei über die korrespondierenden Außen- und Innengewinde das Lastrohr mit dem Druckteller verbunden ist und bei einer bestimmten Position des Drucktellers ein bestimmter Abstand des Lastrohres zur Standseite in Lastrichtung einstellbar ist. Bei dieser Ausführungsform kann die Höhe der Federstütze in der Lastrichtung neben der Variierbarkeit der Gehäusehöhe in Lastrichtung noch dadurch verändert werden, dass der Abstand des Lastrohres zur Standseite eingestellt wird. Dies ermöglicht einen noch größeren Anwendungsbereich der erfindungsgemäßen Federstütze. Dabei können Druckteller, Lastrohr und Gehäuse so zueinander korrespondierend ausgebildet sein, dass die Gewinde an Druckteller und Lastrohr eine Verringerung des Abstands zwischen Lastrohr und Standseite nur in dem Maße zulassen, dass das Lastrohr bei dem Anliegen des Drucktellers an der Oberseite des Verschiebegehäuses auch bei der minimal einstellbaren Gehäusehöhe in Lastrichtung nicht an der Standseite anliegt, damit auch in dieser Position ein ausreichender Federweg bei einer Belastung der Federstütze in der Lastrichtung gewährleistet ist. Innen- und Außengewinde an Druckteller und Lastrohr können beispielsweise so ausgebildet sein, dass sie eine relative Verschiebung von Druckteller und Lastrohr zueinander in einem Streckenbereich von bis zum 30 mm, insbesondere bis zu 20 mm ermöglichen.

In einer Ausführungsform weist das Verschiebegehäuse zumindest eine Sicke auf, die bei einem Anliegen des Drucktellers an der zum Innenraum gewandten Oberseite des Gehäuses in einer Senke des Drucktellers angeordnet ist zum Verhindern einer Verdrehung des Drucktellers zu dem Verschiebegehäuse um die Lastrichtung. Beispielsweise kann der Druckteller hierzu an einem Abschnitt der zum Innenraum gewandten Oberseite anliegen. Beispielsweise kann der Druckteller hierzu an einem Haltevorsprung, der die Öffnung begrenzt, anliegen. Durch das Anordnen der Sicke des Verschiebegehäuses in der Senke des Drucktellers kann eine besonders stabile Lage der Federstütze ermöglicht sein. Insbesondere kann dadurch ein relatives Verdrehen des Lastrohres zum Druckteller zuverlässig ermöglicht sein, beispielsweise zum Einstellen des Abstands des Lastrohres von der Standseite des Standgehäuses.

Vorzugsweise ist an dem von der Standseite wegweisenden axialen Ende des Lastrohres ein Lastteller angeordnet, auf dem insbesondere ein Gleitelement angeordnet sein kann. Über den Lastteller kann das Lastrohr zuverlässig eine erhebliche Last eines Bauelements aufnehmen. Das Gleitelement kann eine Verschiebung des Bauelements auf dem Druckteller ermöglichen, ohne dass es dazu zu einer Reibung zwischen Bauelement und Lastteller und zu einem Verkippen oder Zerstören der Federstütze kommen kann.

Das Lastrohr kann seinem von der Standseite wegweisenden axialen Ende zumindest eine Bohrung aufweisen, die senkrecht zur Lastrichtung durch das Lastrohr verläuft. Dadurch kann das Lastrohr beispielsweise besonders einfach relativ zum Druckteller und/oder Gehäuse verdrehbar sein.

In einer Ausführungsform weist das Standgehäuse in seiner in Lastrichtung verlaufenden Seitenwand zumindest zwei Ausnehmungen auf, die jeweils über mindestens die Hälfte der Erstreckung des Standgehäuses in der Lastrichtung verlaufen und zur Aufnahme einer Blockiervorrichtung geeignet sind, die eine Halteeinrichtung aufweist zum Halten eines an dem Verschiebegehäuse angeordneten Vorsprungs zum Fixieren einer relativen Position von Standgehäuse und Verschiebegehäuse zueinander. Entsprechende Blockiervorrichtungen sind dem Fachmann hinlänglich bekannt und werden üblicherweise zum Einstellen einer Vorspannung der Druckfeder eingesetzt, damit die Federstütze auf die erwartete Lastkraft eines Bauelements eingestellt werden kann. Üblicherweise erfolgt bei herkömmlichen Federstützen ein Fixieren der relativen Position des Drucktellers zum Gehäuse, wobei der Druckteller entsprechende Vorsprünge aufweist, an die eine Halteeinrichtung angreifen kann. Die beschriebene Ausführungsform geht einen anderen Weg. In der beschriebenen Ausführungsform ist ein Vorsprung an dem Verschiebegehäuse angeordnet, wobei die Vorspannung der Druckfeder über eine Position des Verschiebegehäuses relativ zum Standgehäuse eingestellt wird. Als ein solcher Vorsprung kann beispielsweise der oben erläuterte zweite Arretiervorsprung dienen. Ein solcher Vorsprung kann beispielsweise an der Außenseite des Verschiebegehäuses angeordnet, beispielsweise angeschweißt sein, wobei das Verschiebegehäuse in einer Richtung senkrecht zur Lastrichtung innerhalb des Standgehäuses angeordnet sein kann. Über eine entsprechende Aussparung in dem Standgehäuse kann ein besonders einfaches Fixieren der relativen Position von Standgehäuse und Verschiebegehäuse und damit ein besonders einfaches Feststellen einer Vorspannung der Druckfeder ermöglicht sein. Beispielsweise können die zwei Ausnehmungen an einander gegenüberliegenden Seiten des Standgehäuses vorgesehen sein, so dass eine gleichmäßige Fixierung des Verschiebegehäuses zum Standgehäuse ermöglicht sein kann. Beispielsweise können mehr als zwei Ausnehmungen vorgesehen sein, so dass mehrere Blockiervorrichtungen in die Ausnehmungen eingesetzt werden können, so dass ihre Halteeinrichtungen an dem Vorsprung des Verschiebegehäuses angreifen können. Insbesondere kann sich die Blockiervorrichtung durch eine Seitenwand des Standgehäuses hindurch bis zum Verschiebegehäuse hin erstrecken. Insbesondere können sich die Ausnehmungen über mindestens 70 % der Erstreckung des Standgehäuses in Lastrichtung erstrecken, wodurch die Vorspannung der Druckfeder in einem weiten Bereich fixierbar sein kann.

Die Erfindung wird im Folgenden anhand eines Ausführungsbeispiels unter Bezugnahme auf schematische Zeichnungen näher erläutert. Es zeigen:
- Figur 1a:: eine schematische Schnittdarstellung einer Ausführungsform der erfindungsgemäßen Federstütze;
- Figur 1b:: eine schematische Halbschnittdarstellung der Ausführungsform gemäß Figur 1a;
- Figur 2:: eine weitere schematische Schnittdarstellung der Ausführungsform gemäß Figur 1a;
- Figur 3a:: eine schematische Schnittdarstellung der Ausführungsform gemäß Figur 1a mit einer Blockiervorrichtung;
- Figur 3b:: eine schematische Halbschnittdarstellung der Ausführungsform mit Blockiervorrichtung gemäß Figur 3a.

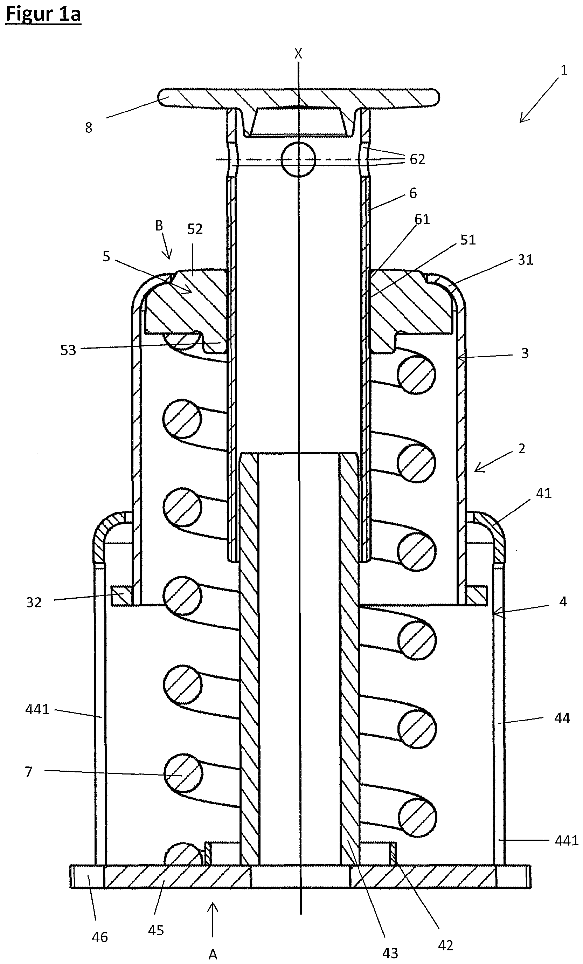

In Figur 1a ist eine Schnittdarstellung durch eine Ausführungsform der erfindungsgemäßen Federstütze 1 schematisch dargestellt. Die Federstütze 1 umfasst ein Gehäuse 2, das aus einem Standgehäuse 4 und einem Verschiebegehäuse 3 besteht. Der sich daraus ergebende zweigeteilte Aufbau des Gehäuses 2 kann allgemein vorteilhaft und besonders einfach sein. Das Standgehäuse ist nach Art eines Hohlzylinders ausgebildet. Die Standseite A der Federstütze 1, auf der die Federstütze 1 in ihrer Betriebsstellung aufgestellt ist, ist an dem Standgehäuse 4 angeordnet. Das Standgehäuse 4 weist eine Bodenplatte 45 auf, in der Löcher 46 vorgesehen sind, damit die Bodenplatte 45 fest an einem Boden verschraubt werden kann. An die Bodenplatte sind ein erster Fixiervorsprung 42, eine zylindrische Führung 43 sowie ein Rohrabschnitt 44 angeschweißt. Der Rohrabschnitt 44 ist nach Art eines Hohlzylinders ausgestaltet und weist einen Außendurchmesser von ca. 200 mm auf. An seinem zur Oberseite gewandten Ende weist das Standgehäuse 4 einen ersten Arretiervorsprung 41 auf, der durch eine Einformung des Rohrabschnitts 44 hergestellt ist. Das Standgehäuse 4 ist zur Oberseite hin offen und weist daher einen Durchgang auf, dessen Durchmesser durch den ersten Arretiervorsprung 41 begrenzt ist.

In einer Richtung senkrecht zur Lastrichtung X ist das Verschiebegehäuse 3 innerhalb des Standgehäuses 4 angeordnet. Dabei erstreckt sich das Verschiebegehäuse 3 in Lastrichtung X durch den Durchgang in dem Standgehäuse 4 hindurch, so dass es in der Lastrichtung X zu beiden Seiten des Durchgangs angeordnet ist. Das Verschiebegehäuse 3 ist als ein weiterer Hohlzylinderabschnitt ausgebildet, an dem ein zweiter Arretiervorsprung 32 sowie ein Haltevorsprung 31 angeordnet ist. Der Hohlzylinderabschnitt ist aus einem Rohr hergestellt, wobei der Haltevorsprung 31 durch eine Einformung des Rohrs hergestellt ist. Der zweite Arretiervorsprung 32 ist nach Art eines Rings ausgebildet und an den Rohrabschnitt angeschweißt, wobei sich der zweite Arretiervorsprung 32 von der Seitenwand des Verschiebegehäuses 3 senkrecht zur Lastrichtung X nach außen erstreckt. Der den Hohlzylinderabschnitt des Verschiebegehäuses 3 ausbildende Rohrabschnitt weist einen Außendurchmesser von ca. 185 mm auf. Der Durchmesser des Durchgangs in dem Standgehäuse 4 beträgt ca. 190 mm, so dass eine im Wesentlichen reibungsfreie Verschiebbarkeit des Verschiebegehäuses 3 zum Standgehäuse 4 ermöglicht ist. Der zweite Arretiervorsprung 32 weist einen äußeren Durchmesser von ca. 195 mm auf. Entsprechend sind das Verschiebegehäuse 3 und das Standgehäuse 4 mit ihren Arretiervorsprüngen 41, 32 so ausgebildet, dass die Verschiebbarkeit des Verschiebegehäuses 3 zum Standgehäuse 4 gegrenzt ist, wobei eine maximale Entfernung des Verschiebegehäuses 3 von der Standseite A des Verschiebegehäuses 4 vorgegeben ist, wobei bei dem Erreichen der maximalen Entfernung des Verschiebegehäuses 3 von der Standseite A die beiden Arretiervorsprünge 32, 41 aneinander anliegen. Dadurch ist ein Auseinandergleiten von Verschiebegehäuse 3 und Standgehäuse 4 effektiv vermieden, so dass bei der dargestellten Ausführungsform ausgeschlossen ist, dass bei einem ruckartigen Nachlassen der auf das Lastrohr 8 wirkenden Lastkraft das Verschiebegehäuse 4 und/oder die Druckfeder 7 und/oder der Druckteller 5 auseinanderspringen und Beschädigungen anrichten können.

Die Druckfeder 7 ist in einer Richtung senkrecht zur Lastrichtung X sowohl innerhalb des Verschiebegehäuses 3 als auch innerhalb des Standgehäuses 4 angeordnet. Die Druckfeder 7 erstreckt sich dabei stets von der dem Innenraum des Gehäuses 2 zugewandten Seite der Bodenplatte 45 bis zu der der Standseite A zugewandten Seite des Drucktellers 5. Dabei ist die Druckfeder 7 über einen ersten Fixiervorsprung 42 an der Bodenplatte 45 des Standgehäuses 4 und über einen zweiten Fixiervorsprung 53 an dem Druckteller 5 geführt. Dadurch ist einem Verschieben der Druckfeder 7 in einer Richtung senkrecht zur Lastrichtung X effektiv vorgebeugt und eine hohe Stabilität der Federstütze 1 gewährleistet. Dabei ist der erste Fixiervorsprung 42 ringförmig ausgebildet, wohingegen der zweite Fixiervorsprung 53 integral als Vorsprung in dem Druckteller 5 vorgesehen ist. Die beiden Fixiervorsprünge 42, 53 verlaufen jeweils radial innerhalb der Druckfeder 7 und liegen an der radialen Innenseite der Druckfeder 7 an.

Durch die Druckfeder 7 ist der Druckteller 5 in jeder seiner möglichen Positionen entlang der Lastrichtung X innerhalb des Gehäuses 2 mit einer Federkraft beaufschlagt, die in der Lastrichtung X zur Oberseite B des Gehäuses 2 hinweist. Der Druckteller 5 weist eine Aussparung auf, in der ein Lastrohr 6 angeordnet ist. In der Aussparung des Drucktellers 5 ist ein Innengewinde 51 vorgesehen, das mit einem an dem Lastrohr 6 vorgesehenen Außengewinde 61 korrespondiert. Dadurch ist die relative Position von Druckteller 5 und Lastrohr 6 in der Lastrichtung X zueinander veränderbar. In dem dargestellten Ausführungsbeispiel ermöglichen Innengewinde 51 und Außengewinde 61 eine Verschiebbarkeit des Lastrohres 6 zum Druckteller 5 in der Lastrichtung X um ca. 20 mm. Entsprechend kann bei einer bestimmten Position des Drucktellers 5 in dem Gehäuse 2 und bei einer bestimmten Position von Verschiebegehäuse 3 und Standgehäuse 4 zueinander die Höhe der Federstütze 1 in der Lastrichtung X durch ein Verdrehen des Lastrohres 6 gegenüber dem Druckteller 5 um den genannten Betrag von ca. 20 mm variiert werden. Dadurch kann die Höhe der Federstütze 1 besonders gut an ihre Einsatzumgebung angepasst werden. Hierzu sind in dem Lastrohr 6 zwei Bohrungen 62 vorgesehen, die sich in einer Richtung senkrecht zur Lastrichtung X durch das Lastrohr 6 erstrecken und über die das Lastrohr 6 einfach gegenüber dem Druckteller 5 verdreht werden kann.

Das Lastrohr 6 ist über die zylindrische Führung 43 geführt. Über die zylindrische Führung 43 ist dabei gewährleistet, dass das Lastrohr 6 in der Verschieberichtung X geführt verschiebbar ist, so dass ein Verkippen des Lastrohres 6 zur Bodenplatte 45 des Standgehäuses 4 wirksam vermieden werden kann, was die Stabilität der Federstütze 1 weiter erhöht. In der in Figur 1a dargestellten Position, in der der Druckteller 5 an der Oberseite B des Gehäuses 2 anliegt, schließt ein Zentriervorsprung 52 des Drucktellers 5 bündig an den Haltevorsprung 31 des Verschiebegehäuses 3 an. Dadurch ist eine besonders gute Führung des Drucktellers 5 zum Gehäuse 2 gewährleistet, was insbesondere bei dem Aufsetzen eines Bauelements auf die Federstütze 1 vorteilhaft sein kann. Zum Kontakt zwischen Federstütze 1 und einem Bauelement ist ferner ein Lastteller 8 vorgesehen, der an dem in Lastrichtung X von der Standseite abgewandten Ende der Federstütze 1 auf dem Lastrohr 6 angeordnet ist. Über den Lastteller 8 erfolgt eine gleichmäßige Kraftübertragung der von einem Bauelement auf den Lastteller 8 aufgebrachten Lastkraft auf das Lastrohr 6.

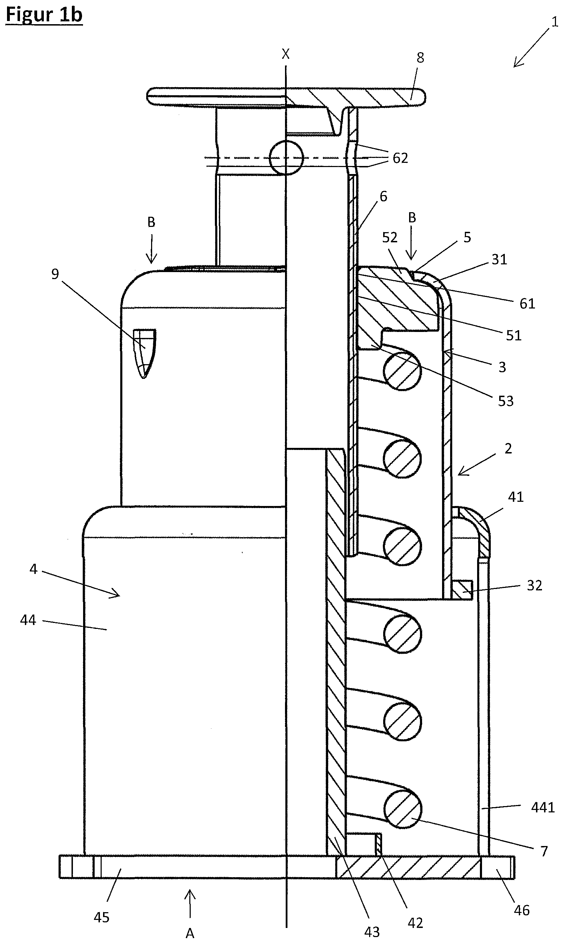

Die in den Figuren 1 bis 3 dargestellte Ausführungsform der erfindungsgemäßen Federstütze 1 ist zum Unterstützen von Bauelementen geeignet, die eine Lastkraft von ca. 3 bis 10 kN auf den Lastteller 8 ausüben. Dabei nimmt die Gehäusehöhe in Lastrichtung X je nach Belastung des Drucktellers 8 mit einer bestimmten Lastkraft einen bestimmten Betrag an. In dem in Figur 1a dargestellten Ausführungsbeispiel ist der Lastteller 8 mit einer geringen Lastkraft von ca. 5 kN belastet. Entsprechend ist das Verschiebegehäuse 3 relativ weit von der Standseite A des Gehäuses 2 entfernt, so dass sich eine relativ hohe Gehäusehöhe in der Lastrichtung X ergibt.

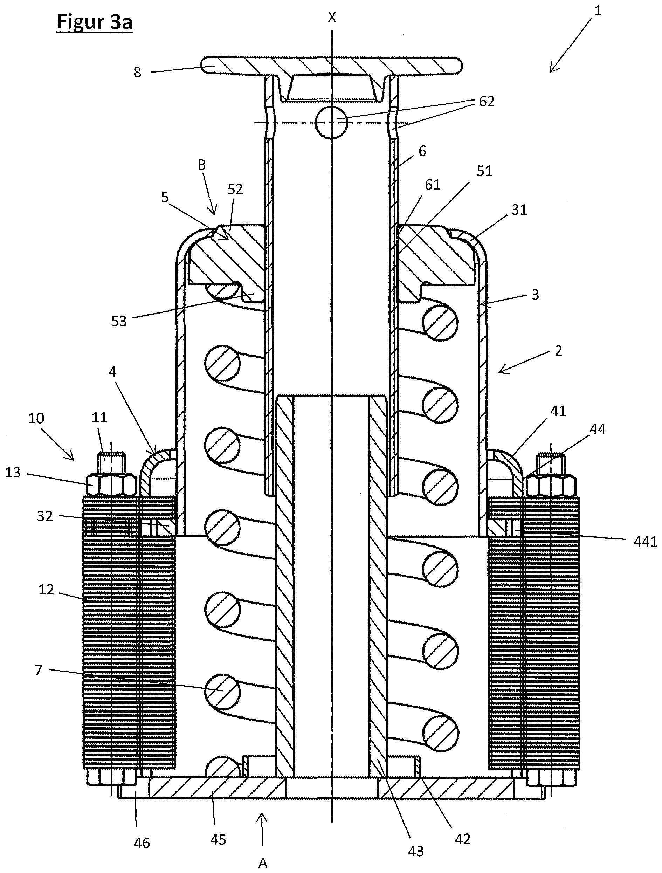

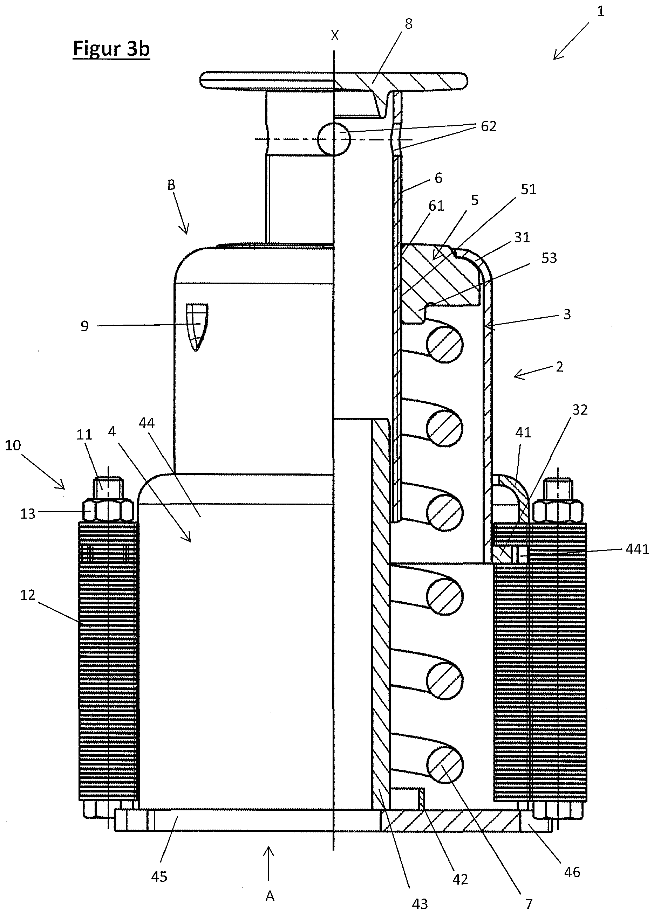

Zur Verdeutlichung des in Figur 1a im Vollschnitt dargestellten Ausführungsbeispiels der erfindungsgemäßen Federstütze 1 ist die Federstütze 1 in derselben Position in Figur 1b in einem Halbschnitt dargestellt. Aus Figur 1b sind die beiden Rohrabschnitte von Standgehäuse 4 und Verschiebegehäuse 3 gut erkennbar, die den Druckteller 5, das Lastrohr 6 und die Gleitführung 43 umfänglich einschließen. Aus den Figuren 1a und 1b ist ferner erkennbar, dass das Standgehäuse 4 zwei Ausnehmungen 441 aufweist, die in Lastrichtung X über einen erheblichen Anteil der Erstreckung des Standgehäuses 4 in der Lastrichtung X verlaufen, vorliegend über ca. 80 % dieser Erstreckung. Diese Ausnehmungen 441 liegen einander gegenüber und sind dazu ausgebildet, dass eine Blockiervorrichtung 10 in die Ausnehmungen 441 eingebracht werden kann und an dem zweiten Arretiervorsprung 32 des Verschiebegehäuses 3 fixiert werden kann zum Fixieren der relativen Position von Verschiebegehäuse 3 und Standgehäuse 4 zueinander. Die Anordnung und Wirkung der Blockiervorrichtung 10 ist in den Figuren 3a und 3b näher erläutert. Aus Figur 1b ist ferner die Sicke 9 erkennbar, die das Verschiebegehäuse 3 aufweist. Die Sicke 9 ist - wie aus Figur 1b nicht erkennbar - in einer Senke an dem Druckteller 5 angeordnet zum Fixieren des Drucktellers in der in Figur 1a, 1b dargestellten Position und zum Verhindern einer relativen Verdrehung des Drucktellers 5 zum Verschiebegehäuse 3.

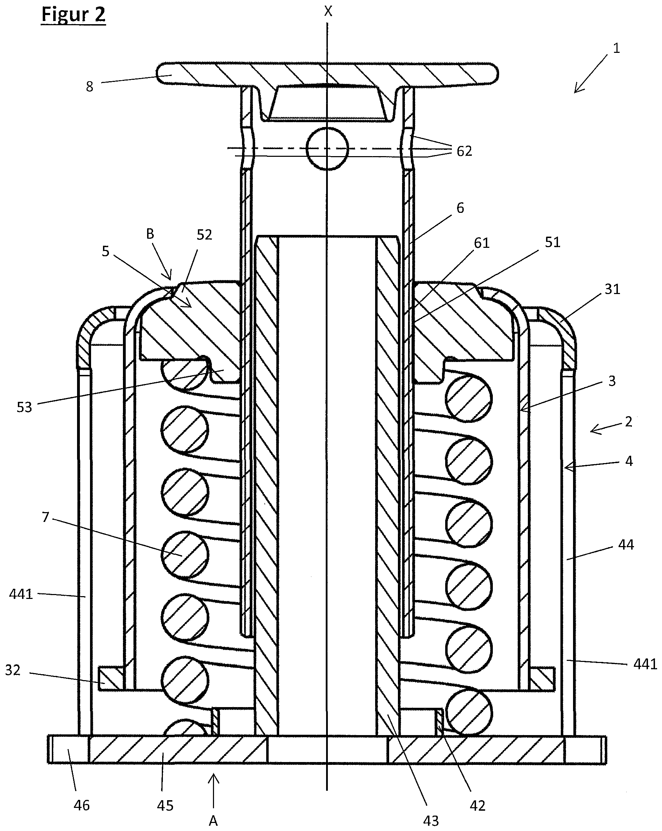

In Figur 2 ist die Federstütze 1 gemäß den Figuren 1a und 1b in einem Vollschnitt in einem Zustand dargestellt, in dem sie mit einer hohen Lastkraft, bei der Darstellung von Figur 2 mit einer Lastkraft von ca. 9 kN, in der Lastrichtung X an dem Druckteller 8 beaufschlagt ist. Aus Figur 2 ist erkennbar, dass die Gehäusehöhe in der Lastrichtung X im Vergleich zu der Darstellung gemäß den Figuren 1a und 1b erheblich verringert ist. Entsprechend kann bei dem gezeigten Ausführungsbeispiel der erfindungsgemäßen Federstütze 1 eine Druckfeder 7 mit einer relativ geringen Federkonstanten eingesetzt werden, die bei einer niedrigen Einbauhöhe, nämlich der Höhe der Federstütze 1 in der Lastrichtung X, eine hohe Tragkraft zum Tragen einer hohen Lastkraft in Lastrichtung X gewährleistet. Prinzipiell ist die relative Verschiebung des Drucktellers 5 zum Standgehäuse 4 dabei auch dann möglich, wenn das Verschiebegehäuse 3 an der Bodenplatte 45 des Standgehäuses 4 aufliegt, da der Druckteller 5 noch relativ zu dem Verschiebegehäuse 3 in der Lastrichtung X verschiebbar ist. Die maximal mögliche Belastung der Federstütze 1 mit einer Lastkraft in der Lastrichtung X ist entweder durch die Druckfeder 7 oder durch den Anschlag des Lastrohres 6 an der Bodenplatte 45 vorgegeben.

In den Figuren 3a und 3b ist die erfindungsgemäße Federstütze 1 in der Position wie in den Figuren 1a und 1b dargestellt gezeigt, wobei die relative Position von Verschiebegehäuse 3 und Standgehäuse 4 zueinander durch eine Blockiervorrichtung 10 gesichert ist. Die Blockiervorrichtung 10 umfasst einen Bolzen 11 sowie Lamellen 12, wobei die Lamellen 12 über ein Verschrauben der Muttern 13 an dem Bolzen 11 zueinander fixiert sind. Aus den Figuren 3a und 3b ist erkennbar, dass die Lamellen 12 eine Halteeinrichtung darstellen, die sich von der Außenseite des Standgehäuses 4 durch die Aussparung 441 in der in der Lastrichtung X verlaufenden Seitenwand des Standgehäuses 4 hindurch bis zu der Außenwand des Verschiebegehäuses 3, die in der Lastrichtung X verläuft, erstrecken. Die auf der Höhe des zweiten Arretiervorsprungs 32 angeordneten Lamellen 12 sind im Vergleich zu den übrigen Lamellen 12 der Blockiervorrichtung 10 ausgelenkt, so dass sich zwischen diesen übrigen Lamellen 12 ein Freiraum ergibt, in dem der zweite Arretiervorsprung 32 angeordnet ist. Durch das Anordnen der Blockiervorrichtung 10 in der Aussparung 441 und das Verklemmen der durch die Lamellen 12 gewährleisteten Halteeinrichtung mit dem zweiten Arretiervorsprung 32 ist die relative Position des Verschiebegehäuses 3 zu dem Standgehäuse 4 gesichert. Beispielsweise kann die Federstütze 1 mit der Blockiervorrichtung 10 gemäß den Figuren 3a und 3b unter ein Bauelement gesetzt werden, wobei durch die Blockiervorrichtung 10 eine Vorspannung der Druckfeder 7 in dem Gehäuse 2 eingestellt ist, die auf die erwartete Lastkraft des Bauelements abgestimmt ist. Sobald das Bauelement mit seiner Lastkraft auf den Lastteller 8 wirkt, kann die Blockiervorrichtung 10 durch Lösen der Muttern 13 von dem zweiten Arretiervorsprung 32 gelöst und von der Federstütze 1 entfernt werden, ohne dass sich eine wesentliche Veränderung der Höhe der Federstütze 1 in der Lastrichtung X ergibt.

Aus dem gezeigten Ausführungsbeispiel ergibt sich für den Fachmann klar die Vorteilhaftigkeit der erfindungsgemäßen Federstütze 1. Dadurch, dass das Gehäuse 2 der Federstütze 1 in der Lastrichtung X teleskopierbar ist, kann die Federstütze 1 in einem weiten Lastbereich eingesetzt werden, wobei darüber hinaus eine geringe Gehäusehöhe der Federstütze 1 bei dem Belasten der Federstütze 1 mit einer hohen Lastkraft gewährleistet ist. Allgemein kann sich die Erfindung auf Federstützen beziehen, bei denen das Standgehäuse 4 einen Außendurchmesser senkrecht zur Lastrichtung X von ca. 100 bis 350 mm, insbesondere 120 bis 320 mm und das Verschiebegehäuse 3 einen entsprechenden Außendurchmesser von ca. 100 bis 300 mm, insbesondere 125 bis 290 mm aufweist. Insbesondere kann es allgemein vorteilhaft sein, dass das Verschiebegehäuse 3 in einer Richtung senkrecht zur Lastrichtung X innerhalb des Standgehäuses 4 angeordnet ist, wobei der Außendurchmesser des Verschiebegehäuses 3 in dieser Richtung ca. 90 bis 95 % des entsprechenden Außendurchmessers des Standgehäuses 4 beträgt. Dadurch kann zum einen ein im Wesentlichen reibungsfreies Verschieben der beiden Gehäuseelemente zueinander und zum anderen ein ausreichender Freiraum innerhalb des Verschiebegehäuses 3 für Druckfeder 7 und Druckteller 5 sowie Lastrohr 6 und zylindrische Führung 43 gewährleistet sein.

### Bezugszeichenliste

- 1: Federstütze
- 2: Gehäuse
- 3: Verschiebegehäuse
- 4: Standgehäuse
- 5: Druckteller
- 6: Lastrohr
- 7: Druckfeder
- 8: Lastteller
- 9: Sicke
- 10: Blockiervorrichtung
- 11: Bolzen
- 12: Lamelle
- 13: Mutter
- 31: Haltevorsprung
- 32: zweiter Arretiervorsprung
- 41: erster Arretiervorsprung
- 42: erster Fixiervorsprung
- 43: zylindrische Führung
- 44: Rohrabschnitt
- 45: Bodenplatte
- 46: Loch
- 51: Innengewinde
- 52: Zentriervorsprung
- 53: zweiter Fixiervorsprung
- 61: Außengewinde
- 62: Bohrung
- 441: Aussparung
- A: Standseite
- B: Oberseite
- X: Lastrichtung

## Patentansprüche

1. Teleskopierbare Federstütze (1), die ein Gehäuse (2), einen Druckteller (5), ein Lastrohr (6) sowie eine Druckfeder (7) umfasst und zum in einer Lastrichtung (X) federnden Unterstützen von Bauelementen ausgebildet ist, wobei das Gehäuse (2) eine Standseite (A) und eine Oberseite (B) aufweist, wobei der Druckteller (5) in dem Gehäuse (2) angeordnet und innerhalb des Gehäuses (2) in der Lastrichtung (X) verschiebbar ist, wobei die Druckfeder (7) zwischen dem Druckteller (5) und der Standseite (A) angeordnet ist und den Druckteller (5) mit einer Federkraft beaufschlagt, die in der Lastrichtung (X) zur Oberseite (B) hin gerichtet ist, wobei das Lastrohr (6) mit dem Druckteller (5) verbunden ist und sich in jeder Position des Drucktellers (5) von dem Inneren des Gehäuses (2) durch eine Öffnung, die an der Oberseite (B) des Gehäuses (2) angeordnet ist, nach außen erstreckt,
**dadurch gekennzeichnet, dass**
das Gehäuse (2) ein Standgehäuse (4) und ein Verschiebegehäuse (3) umfasst, wobei das Verschiebegehäuse (3) in der Lastrichtung (X) zum Standgehäuse (4) verschiebbar ist, wobei das Standgehäuse (4) die Standseite (A) aufweist und das Verschiebegehäuse (3) die Öffnung aufweist, wobei das Standgehäuse (4) eine zylindrische. Führung (43) aufweist, die an der zum Innenraum weisenden Seite der Standfläche angeordnet ist und sich mit ihrer Zylinderachse in der Lastrichtung (X) erstreckt, wobei die zylindrische Führung (43) innerhalb des Lastrohrs (6) verläuft und zum Führen des Lastrohres (6) ausgebildet ist.

2. Teleskopierbare Federstütze (1) nach Anspruch 1,
**dadurch gekennzeichnet, dass**
das Standgehäuse (4) und das Verschiebegehäuse (3) jeweils einen Hohlzylinderabschnitt umfassen, wobei insbesondere die beiden Hohlzylinderabschnitte so angeordnet sind, dass ihre Zylinderachsen zusammenfallen und in der Lastrichtung (X) verlaufen.

3. Teleskopierbare Federstütze (1) nach einem der vorangehenden Ansprüche,
**dadurch gekennzeichnet, dass**
das Standgehäuse (4) einen ersten Arretiervorsprung (41) aufweist und das Verschiebegehäuse (3) einen zweiten Arretiervorsprung (32) aufweist, wobei die beiden Arretiervorsprünge (32, 41) zum Begrenzen der Verschiebbarkeit des Verschiebegehäuses (3) zum Standgehäuse (4) in der Lastrichtung (X) ausgebildet sind, wobei die beiden Arretiervorsprünge (32, 41) so in dem Gehäuse (2) angeordnet sind, dass sie bei einer in Lastrichtung (X) maximalen Entfernung des Verschiebegehäuses (3) von der Standseite (A) aneinander anliegen.

4. Teleskopierbare Federstütze (1) nach einem der vorangehenden Ansprüche,
**dadurch gekennzeichnet, dass**
das Verschiebegehäuse (3) an seinem zur Oberseite (B) gewandten Ende einen senkrecht zur Lastrichtung (X) verlaufenden Haltevorsprung (31) aufweist, der die Öffnung begrenzt.

5. Teleskopierbare Federstütze (1) nach Ansprüche 3 oder 4, **dadurch gekennzeichnet, dass**
das Standgehäuse (4) und/oder das Verschiebegehäuse (3) einen Hohlzylinderabschnitt aufweist, der aus einem Rohr geformt ist, wobei zumindest einer der Arretiervorsprünge (32, 41) oder der Haltevorsprung (31) durch eine Umformung des Rohres gebildet ist.

6. Teleskopierbare Federstütze (1) nach einem der vorangehenden Ansprüche,
**dadurch gekennzeichnet, dass**
das Verschiebegehäuse (3) senkrecht zur Lastrichtung (X) innerhalb des Standgehäuses (4) angeordnet ist.

7. Teleskopierbare Federstütze (1) nach einem der vorangehenden Ansprüche,
**dadurch gekennzeichnet, dass**
die Druckfeder (7) senkrecht zur Lastrichtung (X) innerhalb des Verschiebegehäuses (3) und innerhalb des Standgehäuses (4) angeordnet ist.

8. Teleskopierbare Federstütze (1) nach einem der vorangehenden Ansprüche,
**dadurch gekennzeichnet, dass**
das Standgehäuse (4) an der zum Innenraum weisenden Seite seiner Standseite (A) und/oder der Druckteller (5) an seiner zur Standseite (A) weisenden Seite einen Fixiervorsprung (42, 53) aufweisen, der senkrecht zur Lastrichtung (X) innerhalb der Druckfeder (7) angeordnet ist zum Verhindern einer Verschiebung der Druckfeder (7) in dem Gehäuse.

9. Teleskopierbare Federstütze (1) nach einem der vorangehenden Ansprüche,
**dadurch gekennzeichnet, dass**
der Druckteller (5) eine Aussparung aufweist, durch die das Lastrohr (6) verläuft.

10. Teleskopierbare Federstütze (1) nach Anspruch 9,
**dadurch gekennzeichnet, dass**
die Aussparung ein Innengewinde (51) aufweist, das mit einem an der Außenseite des Lastrohres (6) angeordneten Außengewinde (61) korrespondiert, wobei über die korrespondierenden Außen- und Innengewinde (51, 61) das Lastrohr (6) mit dem Druckteller (5) verbunden ist und bei einer bestimmten Position des Drucktellers (5) ein bestimmter Abstand des Lastrohres (6) zur Standseite (A) in Lastrichtung (X) einstellbar ist.

11. Teleskopierbare Federstütze (1) nach einem der vorangehenden Ansprüche,
**dadurch gekennzeichnet, dass**
das Verschiebegehäuse (3) zumindest eine Sicke (9) aufweist, die bei einem Anliegen des Drucktellers (5) an der zum Innenraum gewandten Oberseite (B) des Gehäuses (2) in einer Senke des Drucktellers (5) angeordnet ist zum Verhindern einer Verdrehung des Drucktellers (5) zu dem Verschiebegehäuse (3) um die Lastrichtung (X).

12. Teleskopierbare Federstütze (1) nach einem der vorangehenden Ansprüche,
**dadurch gekennzeichnet, dass**
an dem von der Standseite (A) wegweisenden axialen Ende des Lastrohres (6) ein Lastteller (8) angeordnet ist, auf dem insbesondere ein Gleitelement angeordnet ist.

13. Teleskopierbare Federstütze (1) nach einem der vorangehenden Ansprüche,
**dadurch gekennzeichnet, dass**
das Lastrohr (6) an seinem von der Standseite (A) wegweisenden axialen Ende zumindest eine Bohrung (62) aufweist, die senkrecht zur Lastrichtung (X) durch das Lastrohr (6) verläuft.

14. Teleskopierbare Federstütze (1) nach einem der vorangehenden Ansprüche,
**dadurch gekennzeichnet, dass**
das Standgehäuse (4) in seiner in Lastrichtung (X) verlaufenden Seitenwand zumindest zwei Ausnehmungen (441) aufweist, die jeweils über mindestens die Hälfte der Erstreckung des Standgehäuses (4) in der Lastrichtung (X) verlaufen und zur Aufnahme einer Blockiervorrichtung (10) geeignet sind, die eine Halteeinrichtung aufweist zum Halten eines an dem Verschiebegehäuse (3) angeordneten Vorsprungs zum Fixieren einer relativen Position von Standgehäuse (4) und Verschiebegehäuse (3) zueinander.

## Claims

1. A telescopable spring support (1), comprising a housing (2), a pressure plate (5), a load pipe (6) and a pressure spring (7), and is formed for the resilient support of components in a loading direction (X), wherein the housing (2) comprises a stand side (A) and an upper side (B), wherein the pressure plate (5) is arranged in the housing (2) and is displaceable within the housing (2) in the loading direction (X), wherein the pressure spring (7) is arranged between the pressure plate (5) and the stand side (A) and exerts a spring pressure on the pressure plate (5) which is directed in the loading direction (X) towards the upper side (B), wherein the load pipe (6) is connected to the pressure plate (5) and extends to the outside in each position of the pressure plate (5) from the interior of the housing (2) through an opening which is arranged on the upper side (B) of the housing (2),
**characterized in that**
the housing (2) comprises a stand housing (4) and a movable housing (3), wherein the movable housing (3) is displaceable in the loading direction (X) relative to the stand housing (4), wherein the stand housing (4) comprises the stand side (A) and the movable housing (3) comprises the opening, wherein the stand housing (4) comprises a cylindrical guide (43), which is arranged on the side of the stand surface facing the interior space and extends with its cylindrical axis in the loading direction (X), wherein the cylindrical guide (43) extends within the load pipe (6) and is formed for guiding the loadpipe (6).

2. A telescopable spring support (1) according to claim 1, **characterized in that** the stand housing (4) and the movable housing (3) each comprise a hollow cylindrical section, wherein especially the two hollow cylindrical sections are arranged in such a way that their cylinder axes coincide and extend in the loading direction (X).

3. A telescopable spring support (1) according to one of the preceding claims, **characterized in that**
the stand housing (4) comprises a first locking projection (41) and the movable housing (3) comprises a second locking projection (32), wherein the two locking projections (32, 41) are formed for limiting the displaceability of the movable housing (3) relative to the stand housing (4) in the loading direction (X), wherein the two locking projections (32, 41) are arranged in the housing (2) in such a way that they rest on each other at a distance of the movable housing (3) from the stand side (A) which is at a maximum in the loading direction (X).

4. A telescopable spring support (1) according to one of the preceding claims, **characterized in that**
the movable housing (3) comprises at its end facing the upper side (B) a retaining projection (31) which extends perpendicularly to the loading direction (X) and which delimits the opening.

5. A telescopable spring support (1) according to one of the claims 3 or 4, **characterized in that**
the stand housing (4) and/or the movable housing (3) comprises a hollow cylindrical section which is built from a tube, wherein at least one of the locking projections (32, 41) or the retaining projection (31) is shaped by forming the tube.

6. A telescopable spring support (1) according to one of the preceding claims, **characterized in that**
the movable housing (3) is arranged within the stand housing (4) with regard to a direction perpendicular to the loading direction (X).

7. A telescopable spring support (1) according to one of the preceding claims, **characterized in that**
the pressure spring (7) is arranged within the movable housing (3) and within the stand housing (4) with regard to a direction perpendicular to the loading direction (X).

8. A telescopable spring support (1) according to one of the preceding claims, **characterized in that**
the stand housing (4), on the side of its stand side (A) facing the interior space, and/or the pressure plate (5), on its side facing the stand side (A), comprise a fixing projection (42, 53) which is arranged within the pressure spring (7) with regard to a direction perpendicular to the loading direction (X) for preventing a displacement of the pressure spring (7) in the housing.

9. A telescopable spring support (1) according to one of the preceding claims, **characterized in that**
the pressure plate (5) comprises a recess through which the load pipe (6) extends.

10. A telescopable spring support (1) according to claim 9, **characterized in that** the recess comprises an internal thread (51), which corresponds to an external thread (61) arranged on the exterior side of the load pipe (6), wherein the load pipe (6) is connected to the pressure plate (5) via the corresponding exterior and internal threads (51, 61), and a specific distance of the load pipe (6) from the stand side (A) is adjustable in the loading direction (X) at a specific position of the pressure plate (5).

11. A telescopable spring support (1) according to one of the preceding claims, **characterized in that**
the movable housing (3) comprises at least one bead (9), which is arranged in a depression of the pressure plate (5) when the pressure plate (5) rests on the upper side (B) of the housing (2) facing the interior space so as to prevent a twisting of the pressure plate (5) relative to the movable housing (3) about the loading direction (X).

12. A telescopable spring support (1) according to one of the preceding claims, **characterized in that**
a load plate (8) is arranged at the axial end of the load pipe (6) which faces away from the stand side (A), on which a sliding element is arranged in particular.

13. A telescopable spring support (1) according to one of the preceding claims, **characterized in that**
the load pipe (6) comprises at least one borehole (62) at its axial end facing away from the stand side (A), which borehole extends perpendicularly to the loading direction (X) through the load pipe (6).

14. A telescopable spring support (1) according to one of the preceding claims, **characterized in that**
the stand housing (4) comprises at least two recesses (441) in its side wall extending in the loading direction (X), which recesses each extend over at least half the extension of the stand housing (4) in the loading direction (X) and are capable of accommodating a blocking apparatus (10), which comprises a retaining device for retaining a projection arranged on the movable housing (3) for fixing a relative position of stand housing (4) and movable housing (3) with respect to each other.

## Revendications

1. Support de ressort télescopique (1) qui comprend un boîtier (2), une plaque de pression (5), un tube de charge (6) et un ressort de compression (7) et qui est conçu pour supporter élastiquement des composants dans une direction de charge (X), le boîtier (2) ayant un côté d'appui (A) et un côté supérieur (B), la plaque de pression (5) étant disposée dans le boîtier (2) et pouvant être déplacée dans le boîtier (2) dans la direction de charge (X), le ressort de compression (7) étant disposé entre la plaque de pression (5) et le côté d'appui (A) et agissant sur la plaque de pression (5) avec une force de ressort qui est dirigée vers le côté supérieur (B) dans la direction de charge (X), le tube de charge (6) étant relié à la plaque de pression (5) et dans chaque position de la plaque de pression (5) s'étendant vers l'extérieur depuis l'intérieur du boîtier (2) par une ouverture disposée du côté supérieur (B) du boîtier (2),
**caractérisé en ce que**
le boîtier (2) comprend un boîtier stationnaire (4) et un boîtier de déplacement (3), le boîtier de déplacement (3) étant déplaçable dans la direction de charge (X) par rapport au boîtier stationnaire (4), le boîtier stationnaire (4) présentant le côté d'appuie (A) et le boîtier de déplacement (3) présentant l'ouverture, le boîtier stationnaire (4) comportant un guidage cylindrique (43) qui est disposé sur le côté de la surface d'appui tourné vers l'intérieur et s'étend avec son axe de cylindre dans la direction de charge (X), le guidage cylindrique (43) s'étendant à l'intérieur du tube de charge (6) et étant conçu pour guider le tube de charge (6).

2. Support de ressort télescopique selon la revendication 1,
**caractérisé en ce que**
le boîtier stationnaire (4) et le boîtier de déplacement (3) respectivement présentent une partie à cylindre creux, les deux parties à cylindre creux, en particulier, étant disposées de telle sorte que leurs axes de cylindre coïncident et s'étendent dans la direction de charge (X).

3. Support de ressort télescopique (1) selon l'une des revendications précédentes,
**caractérisé en ce que**
le boîtier stationnaire (4) présente une première saillie de verrouillage (41) et le boîtier de déplacement (3) présente une deuxième saillie de verrouillage (32), les deux saillies de verrouillage (32, 41) étant conçues pour limiter le déplacement du boîtier de déplacement (3) par rapport au boîtier stationnaire (4) dans la direction de charge (X), les deux saillies de verrouillage (32, 41) étant disposées dans le boîtier (2) de telle sorte qu'elles s'appuient l'une contre l'autre à une distance maximale du boîtier de déplacement (3) du côté d'appui (A) dans la direction de charge (X).

4. Support de ressort télescopique (1) selon l'une des revendications précédentes,
**caractérisé en ce que**
le boîtier coulissant (3) présente, à son extrémité tournée vers le côté supérieur (B), une saillie de retenue (31) qui s'étend perpendiculairement à la direction de charge (X) et délimite l'ouverture.

5. Support de ressort télescopique (1) selon la revendication 3 ou 4,
**caractérisé en ce que**
le boîtier stationnaire (4) et/ou le boîtier de déplacement (3) présente une partie à cylindre creux qui est formée à partir d'un tube, au moins l'une des saillies de verrouillage (32, 41) ou la saillie de maintien (31) étant formée par une déformation du tube.

6. Support de ressort télescopique (1) selon l'une des revendications précédentes
**caractérisé en ce que**
le boîtier de déplacement (3) est disposé perpendiculairement à la direction de charge (X) dans le boîtier stationnaire (4).

7. Support de ressort télescopique (1) selon l'une des revendications précédentes,
**caractérisé en ce que**
le ressort de compression (7) est disposé perpendiculairement à la direction de charge (X) à l'intérieur du boîtier de déplacement (3) et du boîtier stationnaire (4).

8. Support de ressort télescopique (1) selon l'une des revendications précédentes,
**caractérisé en ce que**
le boîtier stationnaire (4) sur le côté (A) tourné vers l'intérieur et/ou la plaque de pression (5) sur son côté tourné vers le côté d'appui (A) présentent une saillie de fixation (42, 53) qui est disposée perpendiculairement à la direction de charge (X) dans le ressort de compression (7) pour empêcher un déplacement du ressort de compression (7) dans le boîtier.

9. Support de ressort télescopique (1) selon l'une des revendications précédentes,
**caractérisé en ce que**
la plaque de pression (5) présente un évidement à travers lequel s'étend le tube de charge (6).

10. Support de ressort télescopique (1) selon la revendication 9,
**caractérisé en ce que**
l'évidement présente un filetage intérieur (51) qui correspond à un filetage extérieur (61) disposé à l'extérieur du tube de charge (6), le tube de charge (6) étant relié à la plaque de pression (5) par les filetages extérieur et intérieur correspondants (51, 61) et une distance déterminée entre le tube de charge (6) et le côté d'appui (A) étant réglable dans la direction de charge (X) sur une position définie de la plaque de pression (5).

11. Support de ressort télescopique (1) selon l'une des revendications précédentes,
**caractérisé en ce que**
le boîtier de déplacement (3) présente au moins un bourrelet (9) qui est disposé dans une dépression de la plaque de pression (5) lorsque la plaque de pression (5) s'appuie contre ladite face supérieure (B) du boîtier (2) tournée vers l'intérieur, afin d'empêcher la plaque de pression (5) de tourner par rapport au boîtier de déplacement (3) autour de la direction de charge (X).

12. Support de ressort télescopique (1) selon l'une des revendications précédentes,
**caractérisé en ce que**
une plaque de charge (8), sur lequel est notamment disposé un élément coulissant, est disposé à l'extrémité axiale du tube de charge (6) tournée à l'opposé du côté d'appui (A).

13. Support de ressort télescopique (1) selon l'une des revendications précédentes,
**caractérisé en ce que**
le tube de charge (6) présente à son extrémité axiale dirigée à l'opposé du côté d'appui (A) au moins un alésage (62) qui s'étend à travers le tube de charge (6) perpendiculairement à la direction de charge (X).

14. Support de ressort télescopique (1) selon l'une des revendications précédentes,
**caractérisé en ce que**
le boîtier stationnaire (4) présente au moins deux évidements (441) dans sa paroi latérale s'étendant dans la direction de charge (X), qui s'étendent chacun sur au moins la moitié de l'étendue du boîtier stationnaire(4) dans la direction de charge (X) et sont adaptés pour recevoir un dispositif de blocage (10) qui présente un dispositif de retenue pour maintenir une saillie disposée sur le boîtier de déplacement (3) pour fixer une position relative du boîtier stationnaire (4) et du boîtier de déplacement (3) l'un par rapport à l'autre.
